# EUROPEAN PATENT APPLICATION

(11) **EP 2 040 190 A2**
(43) Date of publication of application: **25.03.2009**
(21) Application number: 08164543.4
(22) Date of filing: 17.09.2008
(51) Int. Cl.: G06F 21/00

(54) **Processing HTML extensions to enable support of information cards by relying party**

(30) Priority: 19.09.2007 US 973679 P; 24.01.2008 US 19104
(71) Applicant: Novell, Inc., Provo, Utah 84606-6169 (US)
(72) Inventor: Sermersheim, James G, Woodland Hills UT 84653 (US); Buss, Duane F, West Mountain UT 84651 (US); Hodgkinson, Andrew A., Pleasant Grove UT 84062 (US); Sanders, Daniel S., Orem UT 84057 (US)
(74) Representative: Hanna, Peter William Derek

(57) **Abstract**

A user engages in an on-line transaction with a relying party (330) through a computer system. The relying party requests identity information from the user using HTML extensions. The computer system includes a web browser (225) having browser extensions. The HTML extensions cause the web browser to call a card selector invoker (230). The card selector invoker invokes (520) a card selector (235) to provide a security token. The card selector invoker extracts (530) identity information from the security token and provides (540) the identity information to the web browser. The computer system then returns the identity information to the relying party.

## Description

### FIELD OF THE INVENTION

This invention pertains to performing on-line business transactions requiring identity information, and more particularly to processing identity information at an identity agent rather than a relying party.

### BACKGROUND OF THE INVENTION

When a user interacts with sites on the Internet (hereafter referred to as "service providers" or "relying parties"), the service provider often expects to know something about the user that is requesting the services of the provider. The typical approach for a service provider is to require the user to log into or authenticate to the service provider's computer system. But this approach, while satisfactory for the service provider, is less than ideal for the user. First, the user must remember a username and password for each service provider who expects such information. Given that different computer systems impose different requirements, and the possibility that another user might have chosen the same username, the user might be unable to use the same username/password combination on each such computer system. (There is also the related problem that if the user uses the same username/password combination on multiple computer systems, someone who hacks one such computer system would be able to access other such computer systems.) It is estimated that an average user has over 100 accounts on the Internet. For users, this is becoming an increasingly frustrating problem to deal with. Passwords and account names are too hard to remember. Second, the user has no control over how the service provider uses the information it stores. If the service provider uses the stored information in a way the user does not want, the user has relatively little ability to prevent such abuse, and essentially no recourse after the fact.

Recently, the networking industry has developed the concept of information cards to tackle these problems. Information cards are a familiar metaphor for users and the idea is gaining rapid momentum. Information cards allow users to manage their identity information and control how it is released. This gives users greater convenience in organizing their multiple personae, their preferences, and their relationships with vendors and identity providers. Interactions with on-line vendors are greatly simplified. A system that uses information cards for identity purposes will referred to herein as an Identity Metasystem.

There are currently two kinds of information cards: 1) personal cards (or self-issued cards), and 2) managed cards - or cards that are issued by an identity provider. A personal card contains self-asserted identity information - the person issues the card and is the authority for the identity information it contains. The managed card is issued by an identity provider. The identity provider provides the identity information and asserts its validity.

When a user wants to release identity information to a relying party (i.e. a web site that the user is interacting with), a tool known as a card selector assists the user in selecting an appropriate information card. When a managed card is selected, the card selector communicates with the identity provider to obtain a security token that contains the needed information. This interaction between the card selector and the identity provider typically is secure. The identity provider is provided with authentication materials (such as username/password, X.509 certificate, etc.) to authenticate the user before it will return a security token.

As discussed above, it is common that a relying party takes the form of a web site. In order for a web site to act as a relying party, the web site must be altered from its standard form. Namely, the web site must place content on a web page which will trigger a web browser to invoke an information card selector. This trigger content is typically in the form of a hidden object within a form where the object's type is "application/x-informationCard". When this object causes an information card selector to be invoked at the web browser, the resulting identity information is returned in the form of a response to a request for a security token. This security token requires there to be code at the web server which is capable of parsing the token, validating signatures, decomposing and evaluating its contents. All of these changes to the web site are needed, and require manual customization.

Other relying parties take the form of enterprise and legacy applications, which are comprised of some process which needs identity information input. These enterprise and legacy applications are also required to perform the tasks of parsing, validating, decomposing, and evaluating a security token. Therefore, these applications also must be considerably altered to participate as a relying party. Further, it may not even be possible to make the modifications to make these applications suitable to act as a relying party.

The above requirements on a web server or other application wishing to participate as a relying party present a roadblock to adoption of the Identity Metasystem. Therefore, a need remains for a way to address these and other problems associated with the prior art.

### SUMMARY OF THE INVENTION

The present invention provides apparatus and methods for performing on-line transactions requiring identity information, in accordance with claims which follow. Embodiments of the invention address how identity information is obtained and processed. Embodiments of the invention include a method for providing identity information to a relying party by processing a security token at an identity agent rather than at the relying party. The invention uses HTML extensions and a web browser extension to trigger processing of the security token at the identity agent. The identity information from the security token can then be provided to the relying party in a form fill operation.

The foregoing and other features, objects, and advantages of the invention will become more readily apparent from the following detailed description, which proceeds with reference to the accompanying drawings.

### BRIEF DESCRIPTION OF THE DRAWINGS

FIG. 1 shows a sequence of communications between an identity agent, a relying party, and an identity provider.
FIG. 2 shows details of an identity agent according to an embodiment of the invention.
FIG. 3 shows details of a relying party according to an embodiment of the invention.
FIG. 4 shows details of a web page requesting information from a user.
FIG. 5 shows a flowchart of a procedure for providing identity information to a relying party according to an embodiment of the invention.

### DETAILED DESCRIPTION OF THE PREFERRED EMBODIMENT

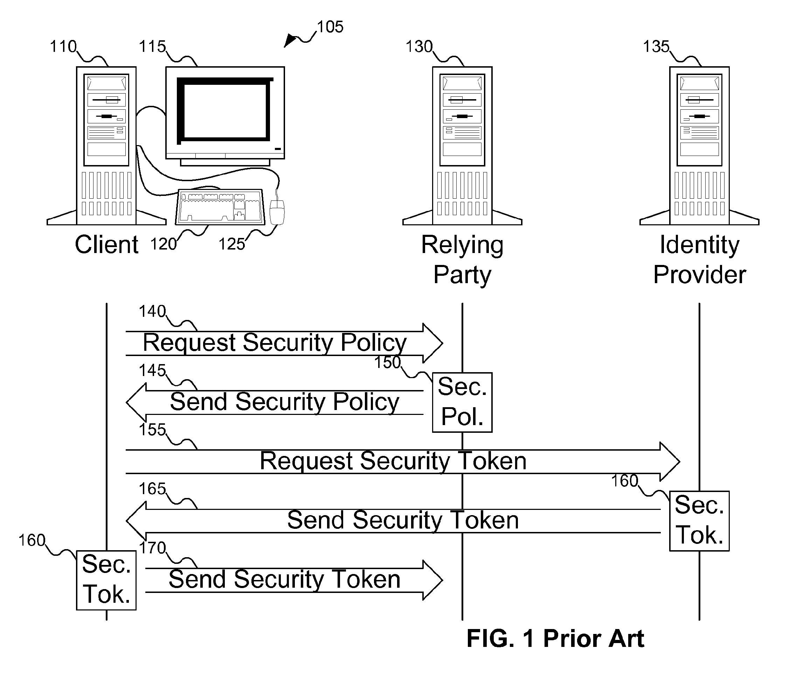

Before explaining embodiments of the invention, it is important to understand the context. FIG. 1 shows a sequence of communications between an identity agent, a relying party, and an identity provider. For simplicity, each party (the identity agent, the relying party, and the identity provider) may be referred to by their machines. Actions attributed to each party are taken by that party's machine, except where the context indicates the actions are taken by the actual party.

In FIG. 1, computer system 105, the identity agent or client, is shown as including computer 110, monitor 115, keyboard 120, and mouse 125. A person skilled in the art will recognize that other components can be included with computer system 105: for example, other input/output devices, such as a printer. In addition, FIG. 1 does not show some of the conventional internal components of computer system 105; for example, a central processing unit, memory, storage, etc. Although not shown in FIG. 1, a person skilled in the art will recognize that computer system 105 can interact with other computer systems, such as relying party 130 and identity provider 135, either directly or over a network (not shown) of any type. Finally, although FIG. 1 shows computer system 105 as a conventional desktop computer, a person skilled in the art will recognize that computer system 105 can be any type of machine or computing device capable of providing the services attributed herein to computer system 105, including, for example, a laptop computer, a personal digital assistant (PDA), or a cellular telephone.

Relying party 130 is a machine managed by a party that relies in some way on the identity of the user of computer system 105. The operator of relying party 130 can be any type of relying party. For example, the operator of relying party 130 can be a merchant running a business on a website. Alternatively, the operator of relying party 130 can be an entity that offers assistance on some matter to registered parties. Relying party 130 is so named because it relies on establishing some identifying information about the user. Relying party 130 can take the form of a web site. The web site includes content on a web page which will trigger a web browser (on computer system 105) to invoke an information card selector. The web page may include a web-based form for the user to enter identity information about the user.

Identity provider 135, on the other hand, is managed by a party responsible for providing identity information (or other such information) about the user for consumption by the relying party 130. Depending on the type of information identity provider 135 stores for a user, a single user might store identifying information with a number of different identity providers 135, any of which might be able to satisfy the request of the relying party 130. For example, identity provider 135 might be a governmental agency, responsible for storing information generated by the government, such as a driver's license number or a social security number. Alternatively, identity provider 135 might be a third party that is in the business of managing identity information on behalf of users.

The conventional methodology of releasing identity information can be found in a number of sources. One such source is Microsoft Corporation, which has published a document entitled Introducing Windows CardSpace, which can be found on the World Wide Web at http://msdn2.microsoft.com/en-us/library/aa480189.aspx and is hereby incorporated by reference. To summarize the operation of Windows CardSpace, when a user wants to access some data from relying party 130, computer system 105 requests the security policy of relying party 130, as shown in communication 140, which is returned in communication 145 as security policy 150. Security policy 150 is a summary of the information relying party 130 needs, how the information should be formatted, and so on.

Once computer system 105 has security policy 150, computer system 105 can identify which information cards will satisfy security policy 150. Different security policies might result in different information cards being usable. For example, if relying party 130 simply needs a username and password combination, the information cards that satisfy this security policy might be different from the information cards that satisfy a security policy requesting the user's full name, mailing address, and social security number. The user can then select an information card that satisfies security policy 150.

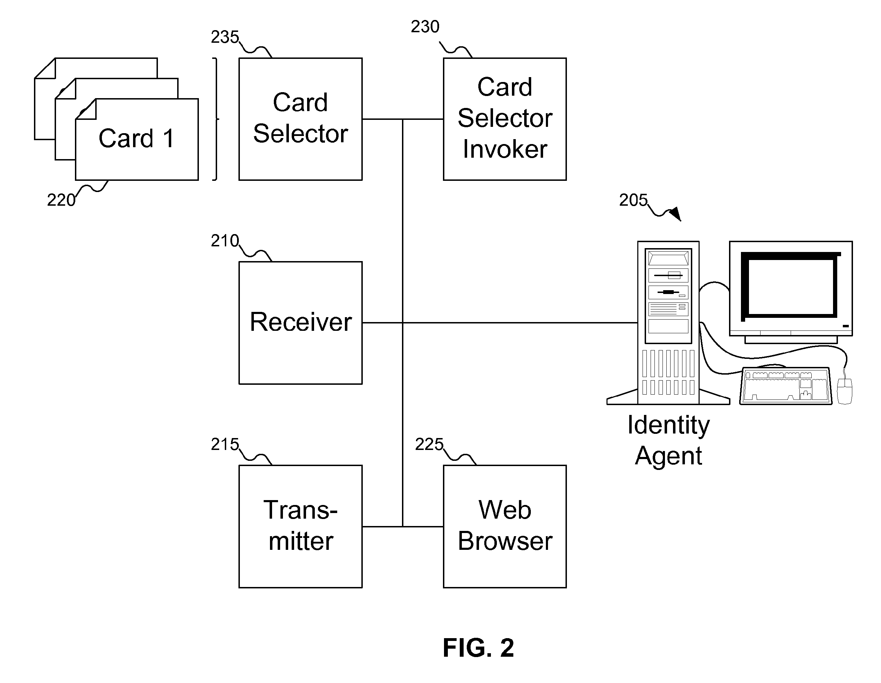

A card selector (described below with respect to FIG. 2) on computer system 105 can be used by the user to select the information card. The card selector can present the user with a list or graphical display of all available information cards and information cards that satisfy the security policy may be high-lighted in some way to distinguish them from the remaining cards. Alternatively, the card selector can display only the information cards that will satisfy the security policy. The card selector can provide a means for the user to select the desired information card by, for instance, a mouse click or a touch on a touch screen. A person skilled in the art will recognize other ways in which the card selector can present information cards to the user and aid the user in selecting an appropriate information card that satisfies security policy 150.

Once the user has selected an acceptable information card, computer system 105 uses the selected information card to transmit a request for a security token to identity provider 135, as shown in communication 155. This request can identify the data to be included in the security token, the credential that identifies the user, and other data the identity provider needs to generate the security token. Identity provider 135 returns security token 160, as shown in communication 165. Security token 160 includes a number of pieces of information that include the data the user wants to release to the relying party. Security token 160 is usually encrypted in some manner, and perhaps signed and/or time-stamped by identity provider 135, so that relying party 130 can be certain that the security token originated with identity provider 135 (as opposed to being spoofed by someone intent on defrauding relying party 130). Computer system 105 then forwards security token 160 to relying party 130, as shown in communication 170.

In addition, the selected information card can be a self-issued information card (also called a personal card): that is, an information card issued not by an identity provider, but by computer system 105 itself. In that case, identity provider 135 effectively becomes part of computer system 105.

Once relying party 130 receives security token 160, relying party 130 parses the token, validates the signature, decomposes the contents, and evaluates the information provided in the security token 160. All of the steps required to obtain identity information from a security token, such as parsing, validating, and decomposing, may be collectively referred to as extracting the identity information from the token.

As described above, conventional implementations of the Identity Metasystem require a relying party to parse a security token, validate signatures, decompose the contents of the token, and associate the contents with the requested information. Thus, a conventional website must be altered considerably to participate as a relying party. However, according to embodiments of the invention, the Identity Metasystem can be implemented without requiring the relying party to perform all of these functions by moving the processing functions to the identity agent.

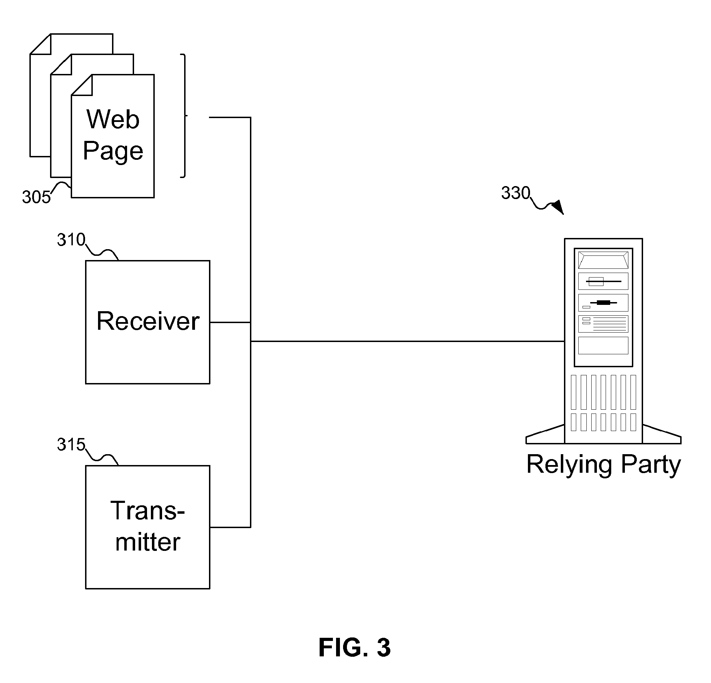

FIG. 2 shows details of an identity agent according to an embodiment of the invention. Referring to FIG. 2, an identity agent 205 includes card selector 235, receiver 210, transmitter 215, web browser 225, and card selector invoker 230. Card selector 235 enables a user to select information card 220 that satisfies the security policy described above with respect to FIG. 1. Receiver 210 receives data transmitted to identity agent 205, and transmitter 215 transmits information from identity agent 205. The receiver 210 and the transmitter 215 can facilitate communications between, for example, identity agent 205, relying party 330 (shown in FIG. 3), and identity provider 135. The web browser 225 enables the user to view web pages provided by, for example, a relying party. The card selector invoker 230: invokes the card selector 235 with standard card selector inputs; receives a security token from the card selector 235; extracts identity information from the security token; and provides the identity information to the web browser 225.

FIG. 3 shows details of a relying party according to an embodiment of the invention. Referring to FIG. 3, relying party 330 includes web page 305, receiver 310, and transmitter 315. Web page 305 enables identity agent 205 to interact with information available at the relying party 330. Web page 305 can also obtain information from the identity agent 205 by, for example, presenting several fields in a web-based form for a user on identity agent 205 to fill in. Receiver 310 receives data transmitted to relying party 330, and transmitter 315 transmits information from relying party 330. The receiver 310 and the transmitter 315 can facilitate communications between, for example, identity agent 205, relying party 330, and identity provider 135.

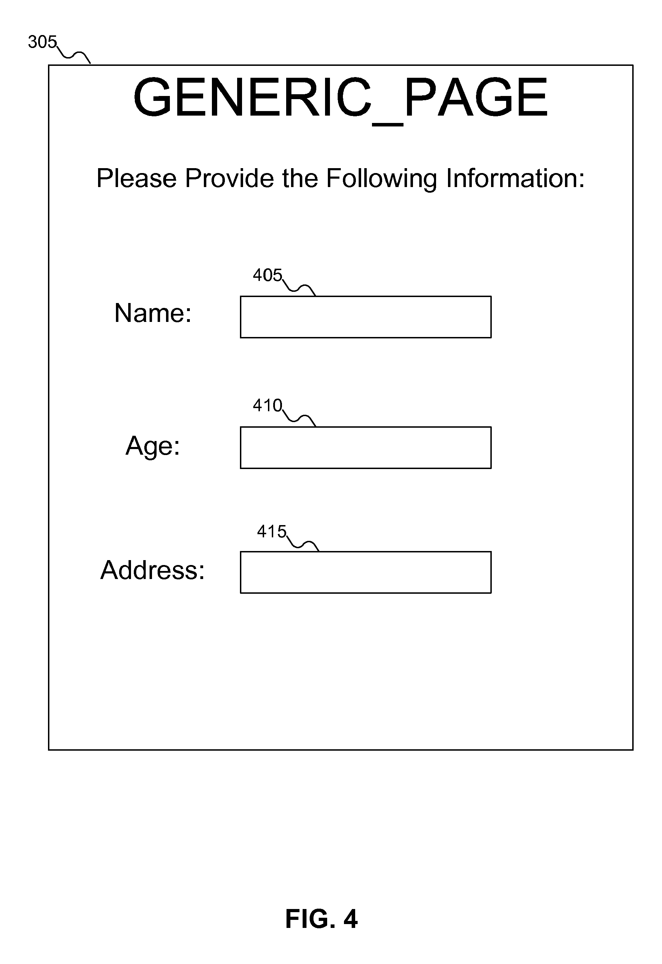

FIG. 4 shows details of a web page requesting information from a user. Referring to FIG. 4, the web page 305 includes several fields requesting information from a user. For example, the web page 305 may include name field 405, age field 410, and address field 415. When viewing web page 305, the user has the option of typing the requested information into the fields directly, or specifying an information card that is capable of supplying the requested information.

A person of ordinary skill in the art will appreciate that web page 305 comprises HTML code. The HTML code can include a plurality of HTML tags. These HTML tags control such features of the web page as how it is displayed and what links to other web pages will be included. As an example, the HTML code can include an input tag and the input tag can include various attributes, such as type, name, and size. Each of the input tag attributes may have a value. For example, the 'type' input tag attribute may have a value of 'file', indicating a file input type. The HTML code used to generate a portion of a web page including a form might look like the following:

```
        <form name="information" action="" method="post" id="col">
          <label for="address">Address</label>
          <input id="address" name="address" type="text" class="textbox" value=""/>
          <label for="age">Age</label>
          <input id="age" name="age" type="age" class="textbox" value="" />
        </form>
```

The HTML tags and attributes that are supported by web browsers are generally defined in an HTML specification. Additional tags and attributes can be defined before being included in the HTML specification and these additional tags and attributes can be referred to generally as HTML extensions. HTML extensions are not required to be included in the HTML specification to be useful, as long as a web browser is capable of interpreting the HTML extensions. As described below, according to embodiments of the invention, HTML extensions can be used to implement the Identity Metasystem.

According to some embodiments of the invention, the Identity Metasystem can be implemented by moving the processing of security tokens to the identity agent. This is accomplished through three concepts: 1) extensions to HTML elements; 2) a web browser extension that, upon sensing the above extensions, performs form-fill or submit operations; and 3) a process (card selector invoker) which performs operations on security tokens that a traditional relying party would otherwise have to perform. Each of these is described below.

### HTML Extensions

For purposes of triggering a web browser extension to perform the tasks traditionally performed by a relying party, a number of HTML extensions can be employed. One of ordinary skill in the art will appreciate that the extensions described below are examples and that any extension could be employed as long as it conveys information sufficient to allow a web browser extension (see Web Browser Extension below) to be triggered when a relying party is requesting identity information.

According to a first embodiment of the present invention, an HTML extension can be an input field attribute. The input field attribute can be called "claim". The value of the input field attribute can be in the form of a Uniform Resource Identifier (URI). Claim URIs can be the actual claim names which will ultimately be requested by the web browser extension. Claim names identify some attribute of an identity. For example, a claim name can be the age of a user or the user's address.

HTML code to generate a form with an input field including a claim attribute might look like this:

```
        <form name="information" action="" method="post" id="col">
          <label for="age">Age</label>
          <input type="text" name="age" size="30"
 claim="http://schemas.xmlsoap.org/ws/2005/05/identity/claims/age">
        </form>
```

In this case, the input field attributes "type", "name", and "size" are already included in the HTML specification. The input field attribute "claim" is an HTML extension. In the example shown above, the value of the "claim" input field attribute is "http://schemas.xmlsoap.org/ws/2005/05/identity/claims/age".

According to a second embodiment of the present invention, an HTML extension can be an input field element. The input field element can be a new element which is subordinate to the HTML input element. The input field element name can be "claim" and it can contain an attribute called "name". The value of the name attribute is in the form of a URI and contains the claim name being requested. Other attributes and sub-elements of this claim element can be introduced to convey other information such as a list of preferred identity providers, a prioritization of claims, etc.

HTML code to generate a form with a claim input field element might look like this:

```
        <form name="information" action="" method="post" id="col">
          <label for="age">Age</label>
          <input id="age" name="age" type="age" class="textbox" value="">
            <claim name="http://schemas.xmlsoap.org/ws/2005/05/identity/claims/age">
          </input>
        </form>
```

In this case, "claim" is the input field element, "name" is an attribute of the claim element, and "http://schemas.xmlsoap.org/ws/2005/05/identity/claims/age" is the value of the attribute.

A further aspect of the present invention is that by providing standard claim names to be used with either the claim input field element or the claim input field attribute, the relying party can ensure that proper identity information is retrieved. Specifically, the card selector invoker will receive the claim names, obtain the appropriate identity information corresponding to the claim names, and then provide that identity information to the relying party. Thus, the relying party will receive the correct identity information for each claim, whereas in conventional systems, the relying party has to parse the security token and attempt to associate the provided identity information with the appropriate input fields.

By using the HTML extensions according to any of these embodiments, a relying party can easily modify a web page to use the Identity Metasystem. For example, the relying party could simply update the web page so that each input field includes either a "claim" attribute or a "claim" input field element, leaving responsibility for processing the security token and input of the fields to the card selector invoker. This is a much easier upgrade than incorporating new processing functionality to process security tokens by the relying party.

### Web Browser Extension

According to some embodiments, the web browser extension is triggered by the HTML extensions described above. The web browser detects the use of the HTML extensions, and invokes the web browser extension. Once triggered, the web browser extension gathers claims from the HTML extensions. In other words, the web browser extension finds claims in the web page (either as input field attributes or input field elements) and gathers the claims together. Next, the web browser extension calls the card selector invoker (the card selector invoker is further described below) with a list of the claims. As further described below, the card selector invoker will return a results list to the web browser extension. The web browser extension then performs form-fill or submit with the results from the card selector invoker. A person of ordinary skill in the art will appreciate that a submit operation can include an HTTP Post. The operations performed (whether form fill, submit, HTTP Post, or otherwise) at this step can be configurable and may depend on the claims in the web page.

According to embodiments of the invention, the web browser extension can use XHTML Embedding Attributes Modules to map the claims to the standard input fields. According to other embodiments, the web browser extension can use an online identity attribute dictionary to map the claims to the standard input fields.

By having the web browser extension handle the claim gathering and the form fill, the relying party only has to modify the web page to include the HTML extensions (as described above) and thus implementation of the Identity Metasystem is drastically simplified.

### Card Selector Invoker

According to embodiments of the invention, the card selector invoker is called by the web browser using the web browser extension described above. Also, the card selector invoker can be called by any application, such as an enterprise or legacy application, that needs to make use of an information card to gather identity information. The card selector invoker performs the following tasks: takes as input the needed identity information as a list of claims; invokes the card selector with standard card selector inputs; receives a Request for Security Token Response (RSTR) from the card selector; extracts identity information from the RSTR; and returns claim value(s) to the caller (for example, the web browser or other application). The card selector invoker can also take as inputs additional information such as, but not limited to, a list of preferred identity providers, etc. The standard card selector inputs include, at a minimum, the claims being requested, but they may also include other items such as trusted identity providers, a security policy, etc.

As described above, according to some embodiments of the invention, the card selector invoker handles operations, such as security token parsing, validation, and decomposition, that conventionally have to be handled by the relying party. Therefore, these operations do not have to be implemented by the relying party in order to implement the Identity Metasystem. A person of ordinary skill in the art will appreciate that the card selector invoker can be incorporated into the web browser as a web browser extension. Alternatively, the card selector invoker can be a separate application on the identity agent that communicates with the web browser.

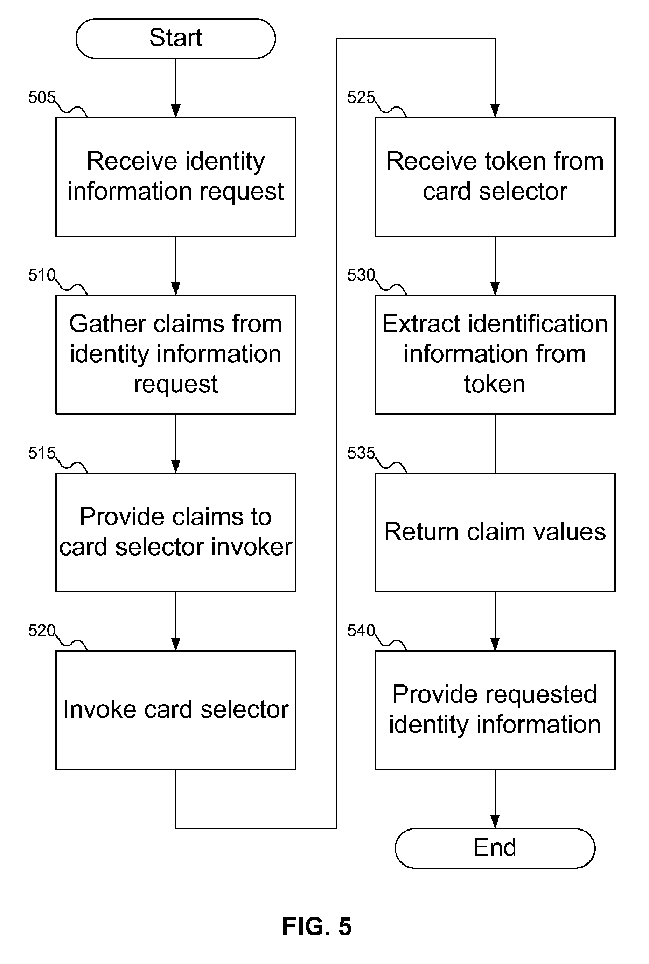

FIG. 5 shows a flowchart of a procedure for providing identity information to a relying party according to an embodiment of the invention. Referring to FIG. 5, a receiving module on the identity agent 205 receives an identity information request from a relying party 330 at block 505. The identity information request can be, for example, an HTML document, and the receiving module can be a web browser. Alternatively, the identity information request can come from an application, such as an enterprise or legacy application. The identity information request includes a plurality of claims that are associated with information that the relying party 330 is requesting. At block 510, the receiving module gathers the claims from the identity information request. The receiving module then provides the claims to card selector invoker 230 at block 515. At block 520, the card selector invoker 230 invokes the card selector 235 with standard card selector inputs. This step may require the card selector invoker 230 to convert the claims into standard card selector inputs. The card selector invoker 230 then receives a token from the card selector 235 at block 525. The token can be part of a Request for Security Token Response (RSTR). In order to provide the token to the card selector invoker 230, the card selector 235 may have to request the token from an identity provider 135. In this case, the card selector 235 may have to communicate with the identity provider 135 over a secure connection, such as a Secure Socket Layer (SSL) connection, in order to obtain a token that the card selector 235 can process. Further, the token may need to be in a standard format, such as a Security Assertion Markup Language (SAML) token, to enable the card selector 235 to process the token. At block 530, the card selector invoker 230 extracts identification information from the token. Extracting identity information from the token may include performing RSTR parsing, validation, decomposition, etc. on the RSTR. At block 535, the card selector invoker 230 returns claim values to the receiving module. Returning claim values may include converting the identity information into claim values. Finally, the receiving module provides the requested information to the relying party 130 at block 540. In the case that the receiving module is a web browser, the web browser may provide the requested information using, for example, form fill, submit, or HTTP post.

As described above, some embodiments of the invention displace certain processing, which conventionally takes place at a relying party, to the identity agent (the party which acts with the information card selector). This approach can be generalized to any embodiment of the Identity Metasystem. Specifically, an enterprise or legacy application could request data from a client application where that data is not in the form of a security token. The client application could bear the work of causing an information card selector to be invoked, and the subsequent work of parsing, validating, evaluating, etc. the data returned in the security token, and then return the appropriate data to the relying party (which is an enterprise or legacy application).

According to embodiments of the invention, a relying party can implement the Identity Metasystem by simply adding claims (either as input field elements or input field attributes) to a web page that requests information from an identity agent. All of the other necessary processing is carried out at the identity agent using a web browser extension and a card selector invoker. Thus, widespread adoption of the Identity Metasystem is facilitated.

Having described and illustrated the principles of the invention with reference to illustrated embodiments, it will be recognized that the illustrated embodiments may be modified in arrangement and detail without departing from such principles, and may be combined in any desired manner. And although the foregoing discussion has focused on particular embodiments, other configurations are contemplated. In particular, even though expressions such as "according to an embodiment of the invention" or the like are used herein, these phrases are meant to generally reference embodiment possibilities, and are not intended to limit the invention to particular embodiment configurations. As used herein, these terms may reference the same or different embodiments that are combinable into other embodiments.

## Claims

1. An apparatus for performing on-line transactions requiring identity information, comprising:
a machine (105,205);
a card selector (235) on the machine;
a receiving module (225) on the machine;
a receiver (210) on the machine to receive an identity information request from a relying party (130,330);
a transmitter (215) to transmit the identity information to the relying party;
**characterized in that**
a card (220) selector invoker (230) on the machine is configured to extract (530) identity information from a security token;
the receiving module (225) is configured to trigger the card selector invoker (230) in response to the identity information request; and
the card selector (235) is configured to provide the security token to the card selector invoker.

2. An apparatus according to claim 1, wherein the identity information request comprises an HTML document (305) having an input field, the input field including a claim attribute.

3. An apparatus according to claim 1, wherein the identity information request comprises an HTML document (305) including a claim input field element (405,410,415).

4. An apparatus according to claim 1, wherein the receiving module is a web browser (225) configured to gather claims from the identity information request.

5. An apparatus according to claim 4, wherein the web browser(225) is further configured to perform one or more of a form fill and a submit using the identity information.

6. An apparatus according to claim 4, wherein the web browser (225) is further configured to use one of an XHTML Embedding Attribute Model and an online identity attribute dictionary.

7. An apparatus according to claim 1, wherein the relying party (330) is one of a web server, an enterprise application, and a legacy application.

8. A method for performing on-line transactions requiring identity information, comprising:
receiving (505) an identity information request from a relying party (330);
invoking (520) a card selector (235) responsive to the identity information request;
obtaining (525) a security token;
extracting (530) identity information from the security token;
transmitting (540) the identity information to the relying party.

9. The method of claim 8, wherein receiving (505) the identity information request comprises receiving an HTML document (305) including one or more input fields including claim attributes.

10. The method of claim 8, wherein receiving the identity information request comprises receiving an HTML document (305) including one or more claim input field elements (405,410,415).

11. The method of claim 8, wherein invoking (520) the card selector (235) comprises:
gathering (510) claims from the identity information request;
providing (515) the claims to a card selector invoker;
converting the claims to standard card selector inputs; and
invoking the card selector using the standard card selector inputs.

12. The method of claim 8, wherein obtaining (525) the security token comprises receiving the security token from an identity provider (205).

13. The method of claim 8, wherein transmitting (540) the identity information to the relying party (330) comprises converting the identity information into claim values.

14. The method of claim 13, wherein transmitting (540) the identity information further comprises performing one of a form fill and a submit using the claim values.

15. A computer program, which when executing on a computer, performs the method of any one of claims 1 to 14.
